# EUROPEAN PATENT APPLICATION

(11) **EP 3 751 879 A1**
(43) Date of publication of application: **16.12.2020**
(21) Application number: 18907430.5
(22) Date of filing: 23.02.2018
(51) Int. Cl.: H04W 12/10, H04W 76/10, H04W 76/18, H04W 76/38

(54) **METHOD AND DEVICE FOR CONTROLLING REPORTING OF SECURITY CHECK FAILURE AND COMPUTER STORAGE MEDIUM**

(71) Applicant: GUANGDONG OPPO MOBILE TELECOMMUNICATIONS CORP., LTD., Wusha, Chang'an Dongguan Guangdong 523860 (CN)
(72) Inventor: TANG, Hai, Dongguan, Guangdong 523860 (CN)
(74) Representative: Manitz Finsterwald Patent- und Rechtsanwaltspartnerschaft mbB
(86) International application number: PCT/CN2018/077063
(87) International publication number: WO 2019/161548

(57) **Abstract**

Disclosed in the present invention are a method and device for controlling the reporting of a security check failure and a computer storage medium, the method comprising: a terminal, when detecting the failure of an integrity protection check on a first data bearer, sends first indication information to a network device and starts a first timer, the first indication information being used to indicate the detection of the integrity protection check failure; if the terminal receives second indication information sent by the network device before the first timer expires, the terminal stops the first timer, and if the terminal does not receive second indication information sent by the network device before the first timer expires, the terminal resends the first indication information to the network device and restarts the first timer.

## Description

### TECHNICAL FIELD

The present invention relates to the field of wireless communication technology, and in particular, to a method and device for controlling reporting of a security check failure, and a computer storage medium.

### BACKGROUND

In order to meet people's pursuit of service speed, delay, high-speed mobility, energy efficiency, and the diversity and complexity of services in future life, the 3rd Generation Partnership Project (3GPP) international standards organization began to develop 5th Generation (5G) mobile communication technology.

The main application scenarios of 5G mobile communication technology are: Enhance Mobile Broadband (eMBB), Ultra Reliable Low Latency Communication (URLLC), and massive Machine Type Communication (mMTC).

5G mobile communication technology is also called a New Radio (NR) communication technology. When NR is deployed in early stage, complete NR coverage is difficult to achieve, so a typical network coverage is a combination of Long Term Evolution (LTE) coverage and NR covers. In addition, in order to protect early investment of mobile operators in LTE, a tight interworking working mode was proposed.

In LTE, there is no requirement for integrity protection of Data Resource Bearer (DRB), but the requirement for integrity protection of DRB is added in NR. Therefore, each Service Data Unit (SDU) of Packet Data Convergence Protocol (PDCP) must carry an integrity protection check code (MAC-I) for an integrity protection check.

A data receiving end needs to perform an integrity protection check on each data packet. If the integrity protection check fails, it is likely that the data was attacked and maliciously modified. The data that has been maliciously modified should be discarded. For this situation, the network side should take appropriate measures to avoid hidden security risks and ensure communication security. Further, when detecting a failure of an integrity protection check on downlink data, the User Equipment (UE) should notify the network side about the failure of the integrity protection check on the data detected by a bearer, but considering the large signaling load on reporting of the integrity protection check failure on the data, measures need to be taken to control the reporting.

### SUMMARY

To solve the above technical problems, embodiments of the present invention provide a method and device for controlling reporting of a security check failure and a computer storage medium.

A method for controlling reporting of a security check failure provided by an embodiment of the present invention includes:
a terminal, when detecting a failure of an integrity protection check on a first data bearer, sends first indication information to a network device and starts a first timer, the first indication information being used to indicate the detection of the integrity protection check failure;
if the terminal receives second indication information sent by the network device before the first timer expires, the terminal stops the first timer, and if the terminal does not receive second indication information sent by the network device before the first timer expires, the terminal resends the first indication information to the network device and restarts the first timer.

In an embodiment of the present invention, the method further includes:
the terminal receives first configuration information sent by the network device, wherein the first configuration information is used to configure a corresponding timer for at least one data bearer, the at least one data bearer includes the first data bearer, the first data bearer corresponds to the first timer.

In an embodiment of the present invention, the at least one data bearer further includes a second data bearer, and the second data bearer corresponds to a second timer; wherein,
the second timer is different from the first timer;
the terminal, when detecting a failure of an integrity protection check on the second data bearer, during operation of the first timer, sends third indication information to the network device and starts the second timer, the third indication information being used to indicate the detection of the integrity protection check failure.

In an embodiment of the present invention, the method further includes:
the terminal receives the second configuration information sent by the network device, wherein the second configuration information is used to configure the corresponding first timer for the terminal, all data bearers of the terminal correspond to the first timer and all data bearers of the terminal include the first data bearer.

In an embodiment of the present invention, the method further includes:
after the terminal sends the first indication information to the network device, if the terminal switches from a first cell to a second cell within a first duration, the terminal resends the first indication information.

In an embodiment of the present invention, the second indication information includes at least reconfiguration information or key update information.

A device for controlling reporting of a security check failure provided by an embodiment of the present invention includes:
a detection unit, configured to detect a failure of an integrity protection check on a first data bearer;
a reporting control unit, configured to send first indication information to a network device and starts a first timer, the first indication information being used to indicate the detection of the integrity protection check failure; if the terminal receives second indication information sent by the network device before the first timer expires, the terminal stops the first timer, and if the terminal does not receive second indication information sent by the network device before the first timer expires, the terminal resends the first indication information to the network device and restarts the first timer.

In an embodiment of the present invention, the device further includes:
a first receiving unit, configured to receive first configuration information sent by the network device, wherein the first configuration information is used to configure a corresponding timer for at least one data bearer, the at least one data bearer includes the first data bearer, the first data bearer corresponds to the first timer.

In an embodiment of the present invention, the at least one data bearer further includes a second data bearer, and the second data bearer corresponds to a second timer; wherein,
the second timer is different from the first timer;
the reporting control unit is further configured to: the detection unit, when detecting a failure of an integrity protection check on the second data bearer, during operation of the first timer, sends third indication information to the network device and starts the second timer, the third indication information being used to indicate the detection of the integrity protection check failure.

In an embodiment of the present invention, the device further includes:
a second receiving unit, configured to: receive the second configuration information sent by the network device, wherein the second configuration information is used to configure the corresponding first timer for the terminal, all data bearers of the terminal correspond to the first timer and all data bearers of the terminal include the first data bearer.

In an embodiment of the present invention, the reporting control unit is further configured to: resend the first indication information at a second cell, if the terminal is switched from a first cell to the second cell within a first duration after the first indication information is sent to the network device.

In an embodiment of the present invention, the second indication information includes at least reconfiguration information or key update information.

A computer storage medium provided by the embodiment of the present invention has computer executable instructions stored thereon, and when the computer executable instructions are executed by a processor, the above method for controlling reporting of a security check failure is implemented.

In the technical solutions of the embodiments of the present invention, a terminal, when detecting the failure of an integrity protection check on a first data bearer, sends first indication information to a network device and starts a first timer, the first indication information being used to indicate the detection of the integrity protection check failure; if the terminal receives second indication information sent by the network device before the first timer expires, the terminal stops the first timer, and if the terminal does not receive second indication information sent by the network device before the first timer expires, the terminal resends the first indication information to the network device and restarts the first timer. By adopting the technical solution of the embodiment of the present invention, the timer may be used to control reporting of indication of the detection of the integrity protection check failure, and the signaling load is effectively controlled.

### BRIEF DESCRIPTION OF THE DRAWINGS

The drawings described herein are used to provide a further understanding of the present invention and form a part of the present application. The schematic embodiments of the present invention and their descriptions are used to explain the present invention and do not constitute an undue limitation on the present invention. In the drawings:
FIG. 1 is a schematic flowchart of a method for controlling reporting of a security check failure according to an embodiment of the present invention;
FIG. 2 is a schematic structural composition diagram of a device for controlling reporting of a security check failure according to an embodiment of the present invention;
FIG. 3 is a schematic structural composition diagram of a computer device according to an embodiment of the present invention.

### DETAILED DESCRIPTION

In order to understand the features and technical contents of the embodiments of the present invention in more detail, the following describes the implementation of the embodiments of the present invention in detail with reference to the drawings. The accompanying drawings are for reference only and are not intended to limit the embodiments of the present invention.

The technical solutions of the embodiments of the present invention are mainly applied to 5G mobile communication systems. Of course, the technical solutions of the embodiments of the present invention are not limited to 5G mobile communication systems, but may also be applied to other types of mobile communication systems. The following describes the main application scenarios in the 5G mobile communication system:
1) eMBB scenario: eMBB aims at users' access to multimedia content, services and data, and its business needs are growing rapidly. Since eMBB may be deployed in different scenarios, such as indoors, urban areas, and rural areas, which also has a relatively large difference in business capabilities and requirements, so the business must be analyzed in conjunction with specific deployment scenarios.
2) URLLC scenario: Typical applications of URLLC include: industrial automation, power automation, telemedicine operation, traffic safety guarantee, etc.
3) mMTC scenario: The typical characteristics of mMTC include: high connection density, small data volume, delay-insensitive services, low cost of modules and long service life.

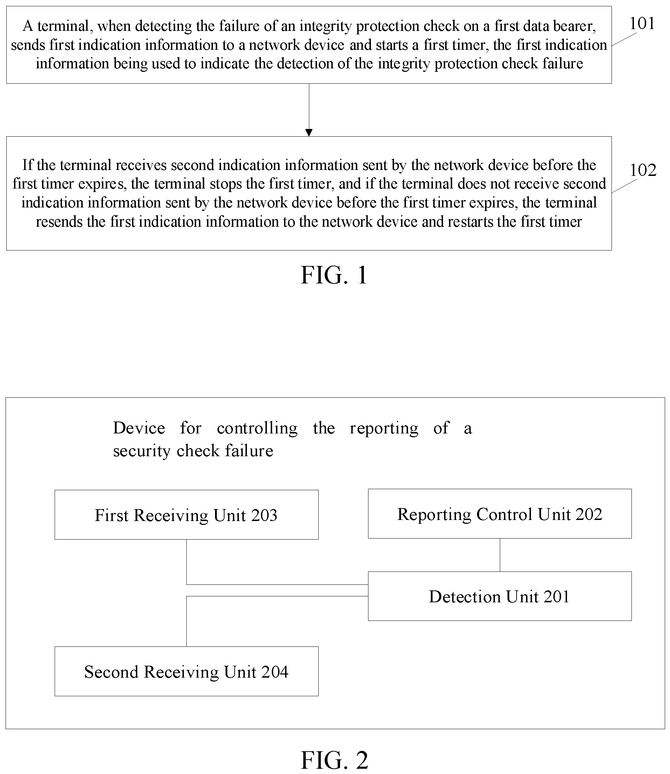

FIG. 1 is a schematic flowchart of a method for controlling reporting of a security check failure according to an embodiment of the present invention. As shown in FIG. 1, the method for controlling the reporting of the security check failure includes the following steps:
Step 101, a terminal, when detecting the failure of an integrity protection check on a first data bearer, sends first indication information to a network device and starts a first timer, the first indication information being used to indicate the detection of the integrity protection check failure.

In an embodiment of the present invention, the terminal is any device that may communicate with a network device, such as a mobile phone, a tablet computer, a notebook computer, or a desktop computer.

In an embodiment of the present invention, the network device may be a base station, such as gNB in 5G.

In an embodiment of the present invention, a process whether each data bearer performs the integrity protection check on the data on the data bearer may be configured through the network side.

In an embodiment of the present invention, the network side may configure an independent timer for each data bearer, thereby achieving independent control of each data bearer; or, a timer is configured for the terminal, so that all data bearers are controlled together. It should be understood that the control here refers to control the reporting of a security check failure.

Step 102, if the terminal receives second indication information sent by the network device before the first timer expires, the terminal stops the first timer, and if the terminal does not receive second indication information sent by the network device before the first timer expires, the terminal resends the first indication information to the network device and restarts the first timer.

In an embodiment of the present invention, the second indication information includes at least reconfiguration information or key update information.

The following describes the technical solutions of the embodiments of the present invention by combining two different types of timers (one independent timer for each data bearer and one timer for the terminal):

### 1) One independent timer is configured for each data bearer

In an embodiment, the terminal receives first configuration information sent by the network device, wherein the first configuration information is used to configure a corresponding timer for at least one data bearer, the at least one data bearer includes the first data bearer, and the first data bearer corresponds to the first timer.

For example, the at least one data bearer further includes a second data bearer, and the second data bearer corresponds to a second timer; wherein, the second timer is different from the first timer; in this case, if detecting a integrity protection check failure on the second data bearer during the operation of the first timer, the terminal sends third indication information to the network device and start the second timer, the third indication information being used to indicate the detection of the integrity protection check failure.

In the above example, two data bearers are used as an example for explanation. It should be understood that the first configuration information may also be configured with a timer corresponding to any number of data bearers, such as a third data bearer, a fourth data bearer, etc. For example, DRB1 corresponds to timer T1, DRB2 corresponds to timer T2, DRB3 corresponds to timer T3, and so on.

Each data bearer uses its own timer to independently control indication information (that is, the first indication information) for the reporting of the security check failure. Specifically, when an integrity protection check failure is detected on a certain data bearer, the terminal reports an indicative message to the network side to indicate that the detection of the integrity protection check failure. Meanwhile, the timer of the data bearing is started. If the network side reconfiguration or key update and other indication information is received before the timer expires, the timer is stopped. If no reconfiguration or key update information is received from the network side before the timer expires, the network side is re-reported with the indication information for the detection of the integrity protection check failure, and the timer is restarted.

### 2) A timer is configured for a terminal

In an embodiment, the terminal receives second configuration information sent by the network device, and the second configuration information is used to configure a corresponding first timer for the terminal, wherein all data bearers of the terminal correspond to the first timer, and all data bearers of the terminal include the first data bearer.

For all data bearers, a timer (that is, a timer of a terminal) is used to control the reporting of indication information of a security check failure (that is, the first indication information). Specifically, when an integrity protection check failure is detected on a certain data bearer, the terminal reports an indicative message to the network side to indicate the detection of the integrity protection check failure. Meanwhile, the timer of the data bearing is started. If the network side reconfiguration or key update and other indication information is received before the timer expires, the timer is stopped. If no reconfiguration or key update information is received from the network side before the timer expires, the network side is re-reported with the indication information for the detection of the integrity protection check failure, and the timer is restarted.

In addition, after the terminal sends the first indication information to the network device, if the terminal switches from a first cell to a second cell within a first duration, the terminal resends the first indication information in the second cell. Here, the first duration may be configured on the network side, or stipulated in a protocol, or obtained according to the terminal's own implementation.

For example, when the terminal sends the first indication information to the corresponding network device 1 in a cell 1, and the terminal is switched from a cell 1 to a cell 2 within a duration of T1, the terminal needs to resend the first indication information to the corresponding network device 2 in the cell 2.

FIG. 2 is a schematic structural composition diagram of a device for controlling the reporting of a security check failure according to an embodiment of the present invention. As shown in FIG. 2, the device includes:
a detection unit 201, configured to detect a failure of an integrity protection check on a first data bearer;
a reporting control unit 202, configured to send first indication information to a network device and starts a first timer, the first indication information being used to indicate the detection of the integrity protection check failure; if the terminal receives second indication information sent by the network device before the first timer expires, the terminal stops the first timer, and if the terminal does not receive second indication information sent by the network device before the first timer expires, the terminal resends the first indication information to the network device and restarts the first timer.

In an embodiment, the device further includes:
a first receiving unit 203, configured to receive first configuration information sent by the network device, wherein the first configuration information is used to configure a corresponding timer for at least one data bearer, the at least one data bearer includes the first data bearer, the first data bearer corresponds to the first timer.

In an embodiment, the at least one data bearer further includes a second data bearer, and the second data bearer corresponds to a second timer; wherein,
the second timer is different from the first timer;
the reporting control unit 202 is further configured to: the detection unit, when detecting a failure of an integrity protection check on the second data bearer, during operation of the first timer, sends third indication information to the network device and starts the second timer, the third indication information being used to indicate the detection of the integrity protection check failure.

In an embodiment, the device further includes:
a second receiving unit 204, configured to: receive the second configuration information sent by the network device, wherein the second configuration information is used to configure the corresponding first timer for the terminal, all data bearers of the terminal correspond to the first timer and all data bearers of the terminal include the first data bearer.

In an embodiment, the reporting control unit 202 is further configured to: resend the first indication information at a second cell, if the terminal is switched from a first cell to the second cell within a first duration after the first indication information is sent to the network device.

In an embodiment, the second indication information includes at least reconfiguration information or key update information.

Those skilled in the art should understand that the implementation function of each unit in the device for controlling the reporting of a security check failure shown in FIG. 2 may be understood by referring to the related description of the foregoing method for controlling the reporting of the security check failure. The function of each unit in the device for controlling the reporting of the security check failure shown in FIG. 2 may be implemented by a program running on a processor, or by a specific logic circuit.

In the embodiment of the present invention, if the above device for controlling the reporting of the security check failure is implemented in the form of a software function module and sold or used as an independent product, it may also be stored in a computer-readable storage medium. Based on this understanding, the technical solutions of the embodiments of the present invention may be embodied in the form of software products in essence or part of contributions to the existing technology. The computer software products are stored in a storage medium and include several instructions for a computer device (which may be a personal computer, server, or network device, etc.) executes all or part of the methods described in the embodiments of the present invention. The foregoing storage media include various media that may store program codes, such as an U disk, a mobile hard disk, a Read Only Memory (ROM), a magnetic disk, or an optical disk. In this way, the embodiments of the present invention are not limited to any specific combination of hardware and software.

Correspondingly, an embodiment of the present invention also provides a computer storage medium in which computer-executable instructions are stored. When the computer-executable instructions are executed by a processor, the method for controlling the failure of reporting security verification in the embodiment of the present invention is implemented.

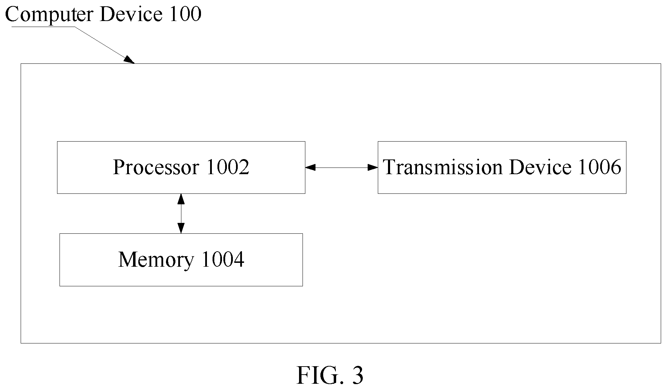

FIG. 3 is a schematic structural diagram of a computer device according to an embodiment of the present invention. The computer device may be any type of terminal. As shown in FIG. 3, the computer device 100 may include one or more (only one is shown in the figure) processor 1002 (the processor 1002 may include but not limited to a Micro Controller Unit (MCU) or a processing device such as a Field Programmable Gate Array (FPGA)), a memory 1004 for storing data, and a transmission device 1006 for a communication function. A person of ordinary skill in the art may understand that the structure shown in FIG. 3 is merely an illustration, which does not limit the structure of the above electronic device. For example, the computer device 100 may also include more or fewer components than those shown in FIG. 3, or have a different configuration from that shown in FIG. 3.

The memory 1004 may be used to store software programs and modules of application software, such as program instructions/modules corresponding to the methods in the embodiments of the present invention. The processor 1002 executes various functional applications by running the software programs and modules stored in the memory 1004 and data processing, that is, to achieve the above method. The memory 1004 may include a high-speed random access memory, and may also include a non-volatile memory, such as one or more magnetic storage devices, flash memory, or other non-volatile solid-state memory. In some examples, the memory 1004 may further include memories remotely provided with respect to the processor 1002, and these remote memories may be connected to the computer device 100 through a network. Examples of the above network include but are not limited to the Internet, intranet, local area network, mobile communication network, and combinations thereof.

The transmission device 1006 is used to receive or transmit data via a network. The specific example of the network described above may include a wireless network provided by a communication provider of the computer device 100. In an example, the transmission device 1006 includes a Network Interface Controller (NIC), which may be connected to other network devices through a base station to communicate with the Internet. In an example, the transmission device 1006 may be a Radio Frequency (RF) module, which is used to communicate with the Internet in a wireless manner.

The technical solutions described in the embodiments of the present invention may be arbitrarily combined without conflict.

In several embodiments provided by the present invention, it should be understood that the disclosed method and smart device may be implemented in other ways. The device embodiments described above are only schematic. For example, the division of the unit is only a division of logical functions. In actual implementation, there may be another division manner, for example, multiple units or components may be combined, or may be integrated into another system, or some features may be ignored, or not implemented. In addition, the coupling or direct coupling or communication connection between the displayed or discussed components may be through some interfaces, and the indirect coupling or communication connection of the device or unit may be electrical, mechanical, or other forms of.

The units described as separate components may or may not be physically separated, and the components displayed as units may or may not be physical units, that is, they may be located in one place or distributed to multiple network units; some or all of the units may be selected according to actual needs to achieve the purpose of the solution of this embodiment.

In addition, the functional units in the embodiments of the present invention may all be integrated into one second processing unit, or each unit may be separately used as a unit, or two or more units may be integrated into one unit; The above integrated unit may be implemented in the form of hardware, or in the form of hardware plus software functional units.

The above are only specific embodiments of the present invention, but the scope of protection of the present invention is not limited to this. Any person skilled in the art may easily think of changes or replacements within the technical scope disclosed by the present invention, and they should be covered within the protection scope of the present invention.

## Claims

1. A method for controlling reporting of a security check failure, comprising:
sending, by a terminal, first indication information to a network device and starting a first timer, when a failure of an integrity protection check on a first data bearer is detected by the terminal, the first indication information being used to indicate detection of the failure of the integrity protection check; and
stopping the first timer if second indication information sent by the network device is received by the terminal before the first timer expires, and resending the first indication information to the network device and restarting the first timer if the second indication information sent by the network device is not received by the terminal before the first timer expires.

2. The method according to claim 1, wherein, the method further comprises:
receiving, by the terminal, first configuration information sent by the network device, wherein the first configuration information is used to configure a corresponding timer for at least one data bearer, the at least one data bearer comprises the first data bearer, the first data bearer corresponds to the first timer.

3. The method according to claim 2, wherein, the at least one data bearer further comprises a second data bearer, and the second data bearer corresponds to a second timer; wherein,
the second timer is different from the first timer; and
send, by the terminal, third indication information to the network device and start the second timer, if a failure of an integrity protection check on the second data bearer is detected by the terminal during operation of the first timer, the third indication information being used to indicate the detection of the failure of the integrity protection check.

4. The method according to claim 1, wherein, the method further comprises:
receiving, by the terminal, the second configuration information sent by the network device, wherein the second configuration information is used to configure the corresponding first timer for the terminal, all data bearers of the terminal correspond to the first timer and all data bearers of the terminal comprise the first data bearer.

5. The method according to any one of claims 1 to 4, wherein, the method further comprises:
resending, by the terminal, the first indication information at a second cell, if the terminal is switched from a first cell to the second cell within a first duration after the first indication information is sent from the terminal to the network device.

6. The method according to any one of claims 1 to 5, wherein, the second indication information comprises at least reconfiguration information or key update information.

7. A device for controlling reporting of a security check failure, comprising:
a detection unit, configured to detect a failure of an integrity protection check on a first data bearer; and
a reporting control unit, configured to send first indication information to a network device and starts a first timer, the first indication information being used to indicate detection of the failure of the integrity protection check; and stop the first timer if second indication information sent by the network device is received by the terminal before the first timer expires, and resend the first indication information to the network device and restart the first timer if the second indication information sent by the network device is not received by the terminal before the first timer expires.

8. The device according to claim 7, wherein, the device further comprises:
a first receiving unit, configured to receive first configuration information sent by the network device, wherein the first configuration information is used to configure a corresponding timer for at least one data bearer, the at least one data bearer comprises the first data bearer, the first data bearer corresponds to the first timer.

9. The device according to claim 8, wherein, the at least one data bearer further comprises a second data bearer, and the second data bearer corresponds to a second timer; wherein,
the second timer is different from the first timer; and
the reporting control unit is further configured to: send third indication information to the network device and start the second timer, if a failure of an integrity protection check on the second data bearer is detected by the detection unit during operation of the first timer, the third indication information being used to indicate the detection of the failure of the integrity protection check.

10. The device according to claim 7, wherein, the device further comprises:
a second receiving unit, configured to: receive the second configuration information sent by the network device, wherein the second configuration information is used to configure the corresponding first timer for the terminal, all data bearers of the terminal correspond to the first timer and all data bearers of the terminal comprise the first data bearer.

11. The device according to any one of claims 7 to 10, wherein, the reporting control unit is further configured to: resend the first indication information at a second cell, if the terminal is switched from a first cell to the second cell within a first duration after the first indication information is sent to the network device.

12. The device according to any one of claims 7 to 11, wherein, the second indication information comprises at least reconfiguration information or key update information.

13. A computer storage medium, having computer-executable instructions stored thereon, wherein the computer-executable instructions are executed by a processor to implement steps of the method of any one of claims 1 to 6.
